# EUROPEAN PATENT APPLICATION

(11) **EP 3 474 207 A1**
(43) Date of publication of application: **24.04.2019**
(21) Application number: 17197174.0
(22) Date of filing: 18.10.2017
(51) Int. Cl.: G06Q 20/00

(54) **IMPROVEMENTS IN ELECTRONIC PAYMENTS VIA PAYMENT CARDS**

(71) Applicant: Mastercard International Incorporated, Purchase NY 10577 (US)
(72) Inventor: NOE, James, London, BR4 0BL (GB); TIERNEY, John, Merseyside, Cheshire CH60 7TF (GB)
(74) Representative: Lawrence, Richard Anthony

(57) **Abstract**

There is provided a computer-implemented method of performing a transaction using a payment card. The method comprises generating a barcode in a form suitable for scanning by a merchant device to process a payment transaction with the merchant device, wherein the barcode comprises payment credentials. The method further comprises either displaying the barcode on the payment card, or providing the barcode from the payment card for display on an electronic device. There is also provided a payment card comprising a processor programmed to perform a transaction as a payment device interacting with a merchant device.

## Description

### TECHNICAL FIELD

The present disclosure relates to improvements in electronic payments and particularly, but not exclusively, to electronic payments via payment cards and using one-dimensional (1-D) or two-dimensional (2-D) barcodes. Aspects of the disclosure relate to a method and a computing device.

### BACKGROUND

To conduct payment transactions electronically such as by using, for example, a prepaid card, a commercial card, a debit card, a credit card or an electronic wallet (e-wallet) on a mobile device, has now become widespread. Currently, two types of electronic payment transactions are commonplace in the payments industry when using debit or credit cards: magnetic-stripe transactions and Europay, MasterCard and Visa (EMV) chip-based transactions. It is possible to perform versions of these transactions that involve both swiping/dipping the card, or by using it contactlessly.

Magnetic-stripe transactions and EMV transactions can be split into two categories: contact transactions and contactless transactions. Contact transactions require that the card be in contact with the terminal for the transaction to occur. For example, magnetic-stripe transactions entail using a card that stores data on a band of magnetic material the magnetic stripe. The payment card is swiped into a terminal by a cardholder to perform a magnetic-stripe transaction. In contrast, contactless transactions use near field communication (NFC) technology to provide payment credentials from the card to a merchant device such as, for example, a point-of-sale (POS) terminal or another computing device, such as a mobile phone or a tablet computer to carry out a contactless transaction, the payment card is held against the merchant device by the cardholder when prompted to do so.

As noted above, payment transactions can also be performed electronically by using an e-wallet application on a mobile device. Typically, a payment transaction performed using an e-wallet uses NFC technology to provide payment credentials from the mobile device to a merchant s POS terminal. Alternatively, e-wallets may be able to perform remote (e-commerce) transactions and secure them with additional cryptographic data. Presently, when using NFC for performing payment transactions, the consumer s electronic device and the merchants reader device must both be compatible with NFC technology for the transaction to occur. There are several electronic devices that are not compatible with NFC such as, for example, Apple s iPhone up to and including iPhone 5S. Although newer models of Apple s iPhone, such as from the iPhone 6 up to and including iPhone 7 Plus, do accommodate NFC capability, the NFC capability of these iPhone models is exclusive to ApplePay. Further, not all merchants are able to accept NFC payments as they would require a compatible card reader.

In addition to or instead of NFC technology, some e-wallets support the use of barcode technology, for example Quick Response Code (QR code or QRC) is an example of a two-dimensional barcode, to perform electronic payments.

At present, there are several limitations with current methods of performing payments by QR codes using e-wallets. For example, normally a smartphone or other equally capable electronic device combined with software for displaying and reading a QR code is required. In addition, when using QR codes for payment transactions, both the merchant and the consumer are required to have a reliable data connection. Furthermore, the scanning of the QR code for performing a payment transaction is not guaranteed to function on every occasion, such as, for example, if the data connection is weak or if the screen of the electronic device malfunctions. An issue with any payment type conducted via an electronic device is that in the event of low battery levels or malfunctioning of the device, it may not be possible to perform the payment transaction. There are also issues with the security of the payment transaction when using a QR code via an e-wallet. For example, the unidirectional nature of QR means that it is not possible for the terminal to participate in the security of the cryptogram generation.

Therefore there is scope for improvement on current methods of electronic payments.

The present disclosure has been devised to widen acceptance or mitigate/overcome at least some of the above-mentioned issues.

### SUMMARY OF THE DISCLOSURE

According to an aspect of the present disclosure there is provided a computer-implemented method of performing a transaction using a payment card. The method comprises generating a barcode in a form suitable for scanning by a merchant device to process a payment transaction with the merchant device, wherein the barcode comprises payment credentials. The method further comprises either displaying the barcode on the payment card, or providing the barcode from the payment card for display on an electronic device.

The barcode may be either a one-dimensional barcode or a two-dimensional barcode.

The barcode may be a static barcode.

The barcode may be a dynamic barcode.

The barcode may be generated external to the payment card.

The barcode may be displayed on the payment card.

The barcode may be printed on the payment card.

The barcode may be printed on a material suitable for attaching onto the payment card.

The barcode may be displayed external to the payment card.

The barcode may be generated on the payment card.

The payment card may comprise a display.

The barcode may be displayed on the display of the payment card.

The generated barcode may be transmitted to and displayed on the electronic device.

The generated barcode may be transmitted to the electronic device using a short range communication technology.

The method may further comprise an authentication step to authenticate the transaction via the electronic device or the merchant device.

The authentication step may comprise displaying a dynamic code generator on the payment card suitable for entering at the merchant device.

The method may further comprise a verification step to verify a cardholder.

The verification step may comprise using a biometric consumer verification method on the payment card.

The verification step may comprise the cardholder entering a passcode on a keypad installed on the payment card.

According to a further aspect of the present disclosure there is provided a payment card comprising a processor programmed to perform a transaction as a payment device interacting with a merchant device. The payment card comprises either a barcode displayed on the payment card, or the processor programmed to generate a barcode for display on another device, wherein the barcode is in a form suitable for scanning by the merchant device to progress a payment transaction and wherein the barcode comprises payment credentials.

The barcode may either reproduce the type of data found in a magstripe or chip transaction, or may alternatively reproduce the type of data found in a secure remote transaction (such as Mastercard s Digital Secure Remote Payment (DSRP) transactions).

### BRIEF DESCRIPTION OF THE DRAWINGS

One or more embodiments of the disclosure will now be described, by way of example only, with reference to the accompanying drawings, in which like components are assigned like numerals and in which:
Figure 1 is a block diagram illustrating a typical four-party model used in payment interactions between entities operating in a card scheme;
Figure 2 is a diagram showing the relevant parts of a conventional payment card suitable for implementing an embodiment of the disclosure;
Figure 3 is a schematic diagram showing exemplary hardware architecture for a mobile computing device suitable for implementing an embodiment of the disclosure;
Figure 4 is a block diagram illustrating the software architecture of a mobile computing device suitable for implementing an embodiment of the disclosure;
Figure 5 is a diagram of a payment card adapted to display a static QR code, in accordance with an embodiment of the disclosure;
Figure 6 is a diagram showing the payment card of Figure 5, further adapted to authenticate a transaction using a dynamic code generator, in accordance with an embodiment of the disclosure;
Figure 7 is a diagram showing the payment card of Figure 6, further adapted to verify a cardholder using a biometric verification method, in accordance with an embodiment of the disclosure;
Figure 8 is a diagram showing the payment card of Figure 6, further adapted to verify a cardholder using a keypad, in accordance with an embodiment of the disclosure;
Figure 9 is a diagram of a payment card adapted to display a dynamic QR code, in accordance with an embodiment of the disclosure;
Figure 10 is a diagram showing the payment card of Figure 9, further adapted to verify a cardholder using a biometric verification method, in accordance with an embodiment of the disclosure;
Figure 11 is a diagram showing the payment card of Figure 9, further adapted to verify a cardholder using a keypad, in accordance with an embodiment of the disclosure;
Figure 12 is a diagram illustrating a payment card adapted to generate a QR code and then transmit and display the QR code on a mobile device, in accordance with an embodiment of the disclosure;
Figure 13 is a block diagram showing method steps in accordance with an embodiment of the disclosure; and
Figure 14 is a block diagram showing method steps in accordance with an embodiment of the disclosure.

### DETAILED DESCRIPTION

The claimed method and device provides a payment solution that uses one-dimensional (1-D) and/ or two-dimensional (2-D) barcode scanning and is integrated into a payment card. In addition, the claimed method and device allow barcodes to be initiated from the payment card.

The approach taken to performing an electronic payment involves using a payment card to make more convenient and more secure payment transactions. The claimed method involves generating a barcode in a form suitable for displaying on a payment card or an electronic device. The barcode comprises payment credentials so that, once the barcode is displayed on the payment card or the electronic device, it can be scanned by a merchant device to perform a payment transaction.

In order to generate the barcode on the electronic device, the data required to generate the barcode may be passed from the payment card to the electronic device. The passing of the data from the payment card to the electronic device may be carried out by using, for example, a near-field communication (NFC) signal providing the information necessary to generate the barcode. Alternatively, a contactless transaction may be performed using the electronic device followed by barcode generation on the electronic device. The electronic device could for this purpose be provided with software adapted to generate a barcode from received code information, together with software either to provide input for code generation from an appropriate NFC interaction, or specifically a contactless transaction (in which case the electronic device will need to be programmed to perform relevant parts of EMV protocols). Once the barcode is generated and displayed on the electronic device, it can be scanned by a merchant device to perform a payment transaction.

The barcode displayed on the user device may be a 1-D barcode, such as a Code 128 barcode or any code that uses a series, or a 2-D, such as a Quick Response Code (QR code or QRC). The barcode may be static or dynamic. A static QR code may be generated and displayed on any user device. For example, a static QR code may be displayed on a payment card by printing the QR code onto the card during card production or by attaching a sticker to the card. Such a sticker may be placed on any object, i.e. the sticker placement may not be limited to a card (e.g. a sticker may be placed on a mobile phone, a mobile phone case, or a key fob). A dynamic QR code, which may change at specific time intervals to ensure freshness, may be displayed on a payment card via an integrated user interface (often referred to as a display card).

The payment card may be coupled with a dynamic code generator for authenticating the transaction or one or more verification means such as, for example, a fingerprint scanner for biometric consumer verification.

The electronic user device and the merchant device used in the claimed disclosure may be any form of electronic device, but the examples used herein are particularly relevant to mobile computing devices such as smartphones. Alternatively, an existing POS setup may include a camera to perform scanning, or be adaptable to enable the scanning to be performed with a laptop or desktop computer s webcam, a tablet s camera or any other such device.

General and specific embodiments of the disclosure will be described below with reference to the Figures.

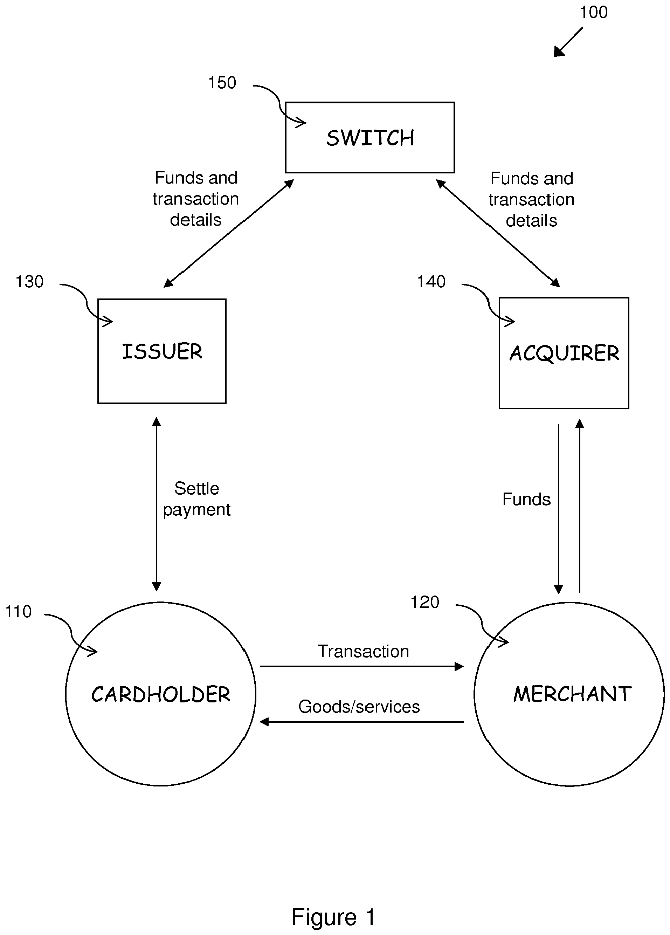

Figure 1 is a block diagram of a typical four-party model or four-party payment transaction scheme. The diagram illustrates the entities present in the model and the interactions occurring between entities operating in a card scheme.

Normally, card schemes payment networks linked to payment cards are based on one of two models: a three-party model or a four-party model (adopted Mastercard).

For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and clearing/settlement. The cardholder 110 initiates a purchase of goods or services from the merchant 120 using their card. Details of the card and the transaction are sent to the issuer 130 via the acquirer 140 and the switch 150 to authorise the transaction. Should the transaction be considered abnormal by the issuer 130, the cardholder 110 may be required to undergo an additional verification process to verify their identity and the details of the transaction. Once the additional verification process is complete the transaction is authorised.

On completion of the transaction between the cardholder 110 and the merchant 120, the transaction details are submitted by the merchant 120 to the acquirer 140 for clearing and settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

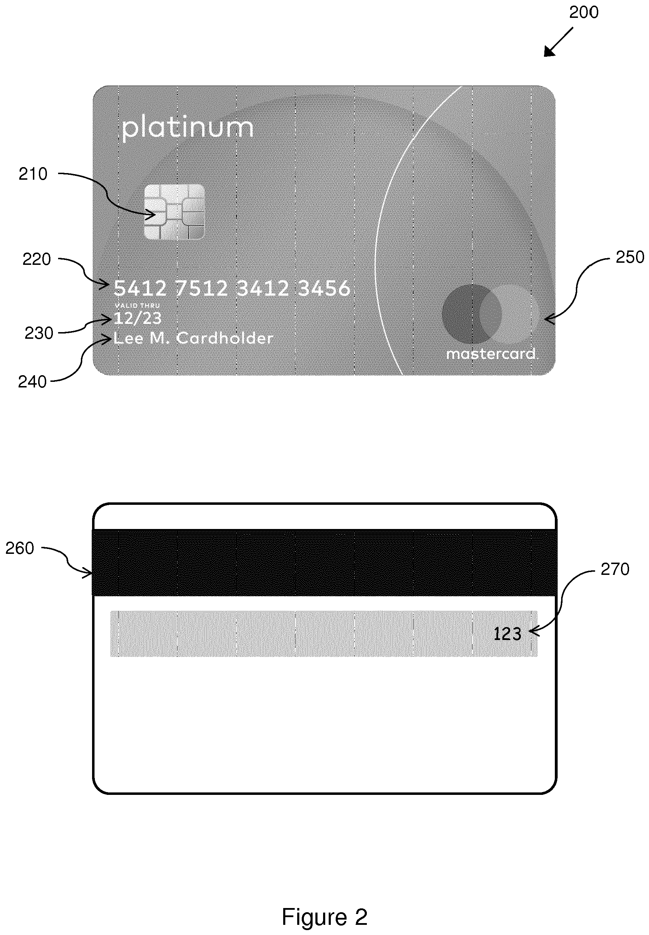

Figure 2 is a diagram showing the relevant parts of a conventional payment card 200. Payment cards comprising the elements shown in the conventional payment card 200 in Figure 2 are suitable for implementing certain embodiments of the disclosure. The payment card 200 comprises a chip 210, a primary account number 220 (which may or may not be visible on the card), an expiration date 230, a cardholder name 240, and a card scheme logo 250, all of which are normally (but not always) visible on the front side of the payment card 200. The payment card 200 further comprises a magnetic stripe 260 and a cardholder verification code (CVC) 270. There may be several CVCs: for example, one encoded into the magnetic stripe; a different one printed onto the signature panel of the card; yet another one in the chip data; and finally a dynamic one used in contactless transactions.

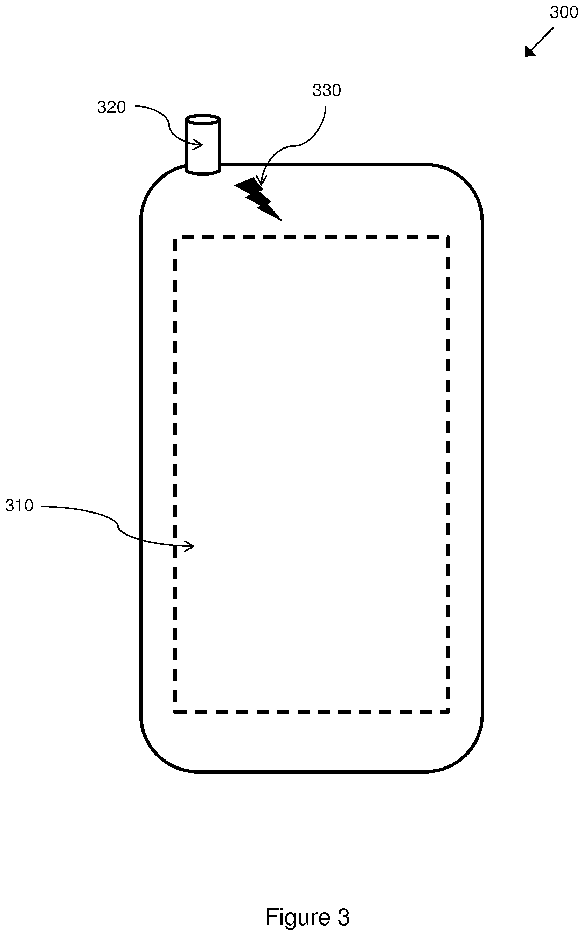

Figure 3 is a schematic diagram showing exemplary hardware architecture for a mobile computing device 300 suitable for implementing an embodiment. In the example shown, the mobile computing device 300 is a mobile cellular telecommunications handset mobile phone or mobile device in other embodiments, the computing device may be another type of computing device such as a laptop computer or a tablet and the computing device need not have cellular telecommunications capabilities. The mobile phone 300 has a display 310 providing, in this example, a touchscreen user interface. The mobile phone 300 is equipped with a wireless telecommunications apparatus 320 for communication with a wireless telecommunications network and local wireless communication apparatus 330.

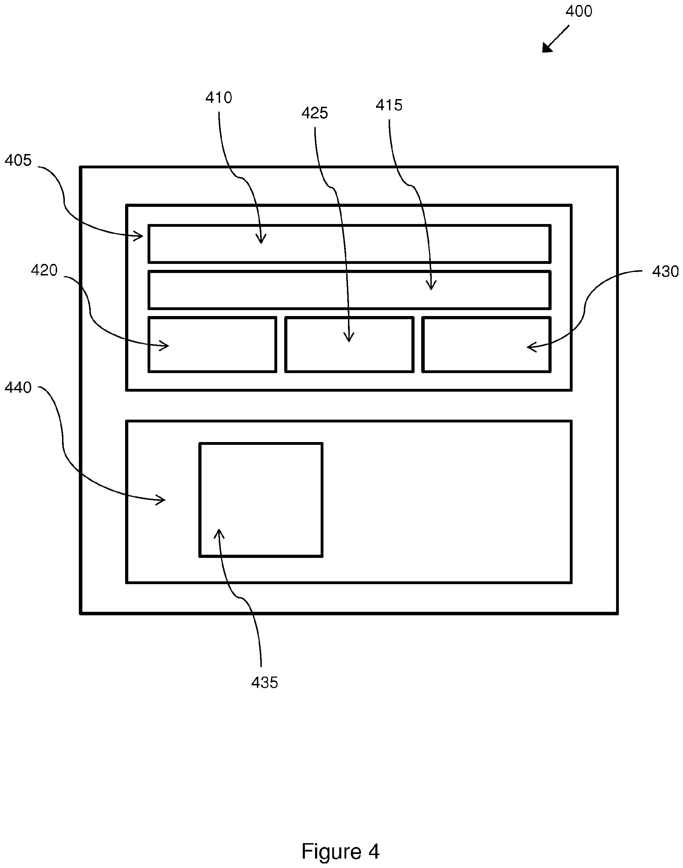

Figure 4 is a block diagram illustrating the software architecture 400 of a mobile computing device suitable for implementing an embodiment. In Figure 4, a main operating environment 405 of the mobile computing device is shown along with a protected operating environment 440. The protected operating environment 440 may be a Subscriber Identity Module SIM, Universal Integrated Circuit Card UICC, a Secure Element or a hardware backed Trusted Execution Environment. Alternatively, there may be a sandbox or other logically protected environment in the main operating environment to provide a secure environment.

The main operating environment 405 comprises an application processor 410 and associated memories 415. The main operating environment may be used with a generic operating system such as iOS or Android. The main operating environment also comprises other applications normally needed by such a mobile computing device, such as a browser 420, a modem 425 and a camera driver 430.

The protected operating environment 440 may comprise an e-wallet software application 435. Alternatively, the elements relevant to the security of the e-wallet software application may be comprised in the protected operating environment. In Figure 4, an e-wallet software application 435 is shown explicitly in the protected operating environment 440. The application may be located within the SIM 405 or within another physically or logically protected environment. Alternatively, some parts of the mobile payment application may be situated in the protected operating environment. Further, data from the application may be located in a protected memory.

Typically, for a contactless EMV transaction to take place on a mobile device the user is authenticated by a consumer device cardholder verification method particularly for higher value transactions, and/or when a threshold number of lower value transactions has been exceeded, though a wallet may be configured to require it for every transaction, or not at all (and instead rely solely on cardholder verification methods at the point of sale terminal such as signature or online PIN). This provides the assurance that the correct cardholder is performing the transaction. Such consumer device cardholder verification methods may include a personal identification number (PIN), a password, the drawing of a pattern on the lock screen of a phone, or biometric authentication mechanisms such as a fingerprint, voice recognition, face recognition, or an iris scan (note that ideally all biometrics will also have a live sensor, thus preventing a fraudster using a still photo for face recognition, or a lifted fingerprint on a fingerprint scanner etc.). Once the user has been authenticated, the user is able to initiate a payment transaction. Contactless EMV transactions can use NFC technology to provide payment credentials from the card to a merchant device such as, for example, a POS terminal to carry out a contactless EMV transaction, the payment card or device can be held against the terminal by the cardholder when prompted to do so. Alternatively, payment credentials may be provided from a user s mobile device to a merchant device. Further detail regarding the initiation of a contactless EMV transaction can be found in the EMV Contactless Specifications for Payment Systems (in particular, Books A-D).

Note that contactless transactions may be carried out by any suitable device (such as a smart watch, a sticker, or other NFC enabled wearable). These all follow similar principles to mobile devices, but may use new authentication techniques.

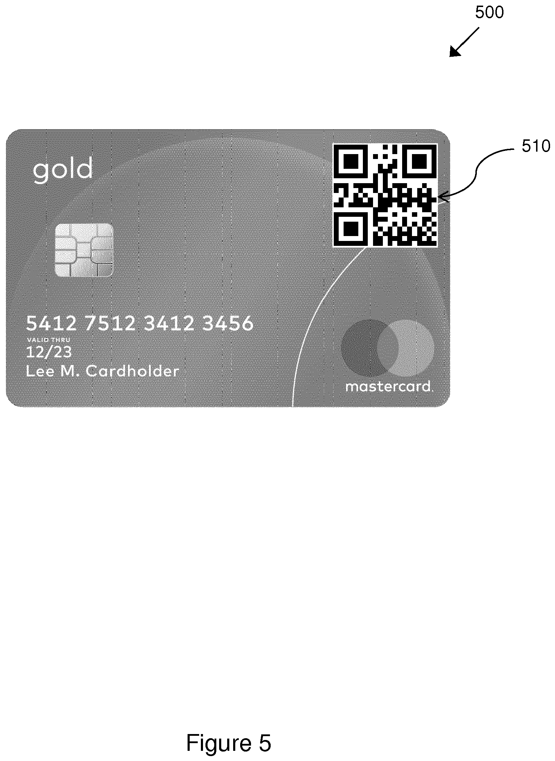

Figure 5 is a diagram of a payment card 500 adapted to display a static QR code for performing a transaction in accordance with a first embodiment.

The payment card 500 comprises the relevant parts of a payment card, as described above with reference to Figure 2. In addition, the payment card 500 comprises a static QR code 510. The static QR code 510 may be attached to the payment card 500, for example, by printing the static QR code directly onto the payment card when the card is being produced, or by printing the static QR code onto a printable material such as paper or plastic and subsequently attaching the printed static QR code to the payment card. The static QR code may be suitable for printing or attaching onto any material or device. Note that if printing onto a sticker, that this does not limit its use to that solely on a plastic card. It could be stuck onto any suitable object such as a mobile phone, a mobile phone case or a key fob. The static QR code may also be suitable for scanning without requiring attachment of the static QR code to a device. The static QR code 510 may comprise payment credentials to enable a cardholder to make a payment. The static QR code 510 may comprise static payment credentials that are not specific to the transaction. For example, the static QR code may include a primary account number (PAN) and an expiry date, a service code and other static issuer discretionary data. The static QR code may also include the name of the cardholder and/or a static card verification code (CVC). The static QR code 510 may then be scanned by the POS terminal to process a payment transaction with the merchant device.

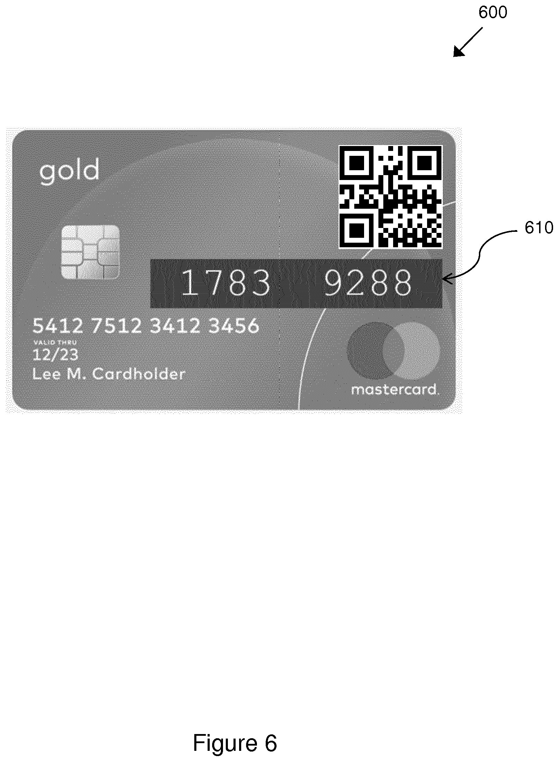

Figure 6 is a diagram showing the payment card of Figure 5, further adapted to authenticate a transaction using a dynamic code generator for performing a transaction in accordance with a second embodiment.

The payment card 600 shown in Figure 6 comprises the relevant parts of a payment card, as described above with reference to Figure 2. In addition, the payment card 600 comprises a static QR code 510, as described with reference to Figure 5, and a dynamic code generator 610. Prior to the scanning of the static QR code 510 by the POS terminal, the dynamic code generator 610 generates a code to be entered at the POS terminal for the purpose of authenticating the possession of the payment card and preventing replay/relay attacks. The code may then be entered at the POS terminal and the static QR code 510 may then be scanned by the POS terminal to process a payment transaction with the merchant device.

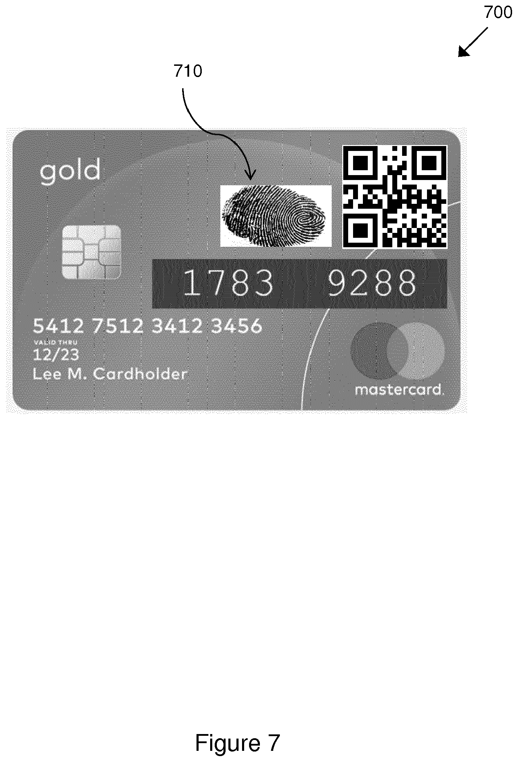

Figure 7 is a diagram showing the payment card of Figure 6, further adapted to verify a cardholder using a biometric verification method in accordance with a third embodiment.

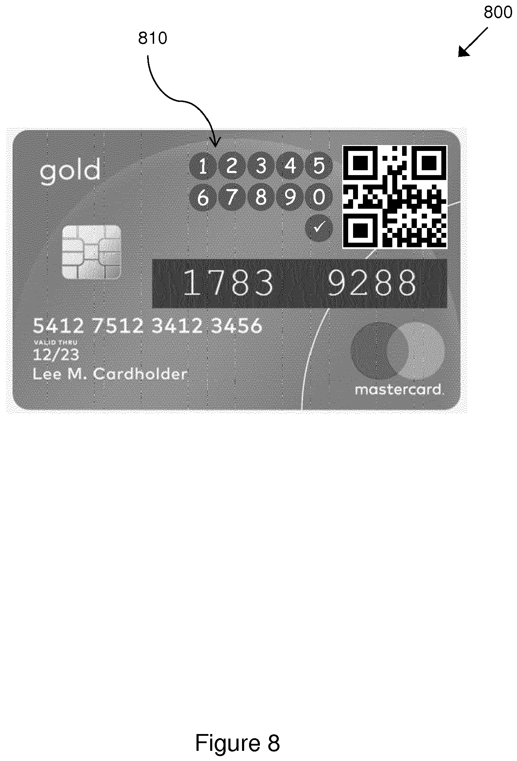

The payment card 700 shown in Figure 7 comprises the relevant parts of a payment card, as described above with reference to Figure 2. In addition to the relevant parts of a payment card, a static QR code 510, as described with reference to Figure 5, and a dynamic code generator 610, as described with reference to Figure 6, the payment card 700 further comprises an in-built consumer verification system. The in-built consumer verification system shown in the payment card 700 in Figure 7 is a fingerprint scanner 710 which enables verification of the cardholder by biometric authentication. The in-built consumer verification system may include other methods of biometric authentication. Alternatively, the cardholder may be verified by the cardholder entering a PIN code into an in-built consumer verification system this example is described further below with reference to Figure 8.

For processing a payment transaction in this case, the cardholder may scan their fingerprint to verify their identity. Once the identity of the cardholder is identified, the dynamic code generator 610 may generate a code for entering at the POS terminal. The code may include information that will allow the verification of the cardholder to be checked. The code may then be entered at the POS terminal and the static QR code 510 may then be scanned by the POS terminal to process a payment transaction with the merchant device.

In the event of a potential fraudulent transaction, an invalid code may be generated by the dynamic code generator 610 to prevent the person attempting to perform a fraudulent transaction from knowing that the code or biometric details that they entered are invalid.

Figure 8 is a diagram showing the payment card of Figure 6, further adapted to verify a cardholder using a keypad, in accordance with a fourth embodiment.

The payment card 800 shown in Figure 8 comprises the relevant parts of a payment card, as described above with reference to Figure 2. In addition to the relevant parts of a payment card, a static QR code 510, as described with reference to Figure 5, and a dynamic code generator 610, as described with reference to Figure 6, the payment card 800 further comprises an in-built consumer verification system. The in-built consumer verification system is an alternative to the biometric authentication system described above with reference with Figure 7. The in-built consumer verification system shown in the payment card 800 in Figure 8 is a keypad 810 that is built into the payment card 800, whereby the keypad 810 enables verification of the cardholder. The in-built consumer verification system may include other devices for verification of the cardholder.

For processing a payment transaction in this case, the cardholder may enter a PIN code or a passcode into the in-built keypad 810 to verify their identity. Once the identity of the cardholder is identified, the dynamic code generator 610 may generate a code for entering at the POS terminal. The code may include information that will allow the verification of the cardholder to be checked. The code generated by the dynamic code generator 610 may then be entered at the POS terminal and the static QR code 510 may then be scanned by the POS terminal to process a payment transaction with the merchant device.

In the event of a potential fraudulent transaction, an invalid code may be generated by the dynamic code generator 610 to prevent the person attempting to perform a fraudulent transaction from knowing that the code or the PIN code that they entered are invalid.

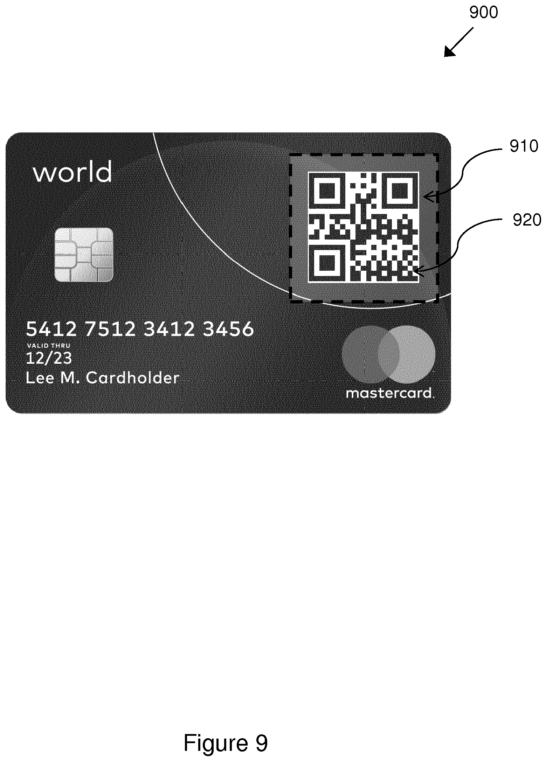

Figure 9 is a diagram of a payment card adapted to display a dynamic QR code in accordance with a fifth embodiment.

The payment card 900 shown in Figure 9 comprises the relevant parts of a payment card, as described above with reference to Figure 2. In addition, the payment card 900 comprises a display 910 such as, for example, an embedded LCD or OLED display, and a dynamic QR code 920 that is generated on the payment card 900.

The dynamic QR code 920 may comprise dynamic payment credentials that are specific to the transaction to enable a cardholder to make a payment. For example, the dynamic QR code 920 may include a PAN, an expiry date, a service code, a CVC and one or more cryptograms with associated data allowing the backend system to validate the cryptogram and prevent replay attacks (for example, by including a transaction counter in the cryptogram which changes for each transaction). Payment transaction information such as, for example, the transaction amount and the currency of the transaction may be entered into a merchant device. The dynamic QR code 920 may then be scanned by the merchant device to process a payment transaction. The dynamic QR code 920 may change at specific time intervals for example every minute, to ensure freshness for time-sensitive data. This feature enables a method of performing a transaction via QR code scanning that is more secure that using a static QR code.

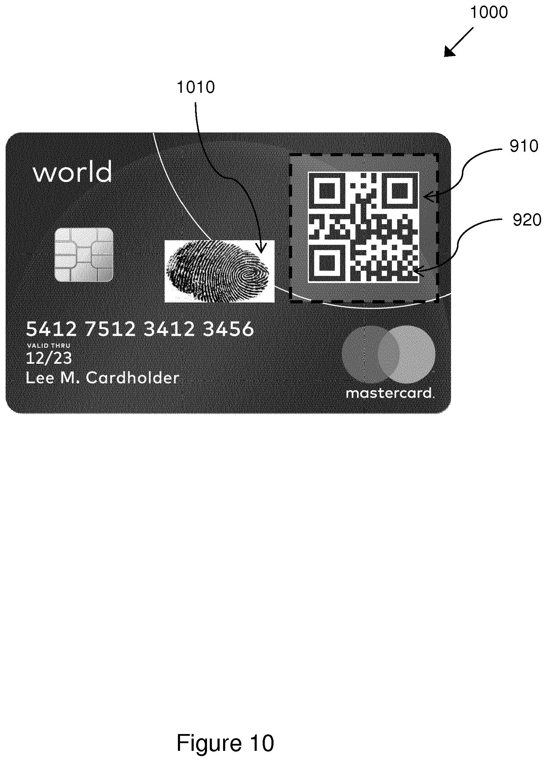

Figure 10 is a diagram showing the payment card of Figure 9, further adapted to verify a cardholder using a biometric verification method, in accordance with a sixth embodiment.

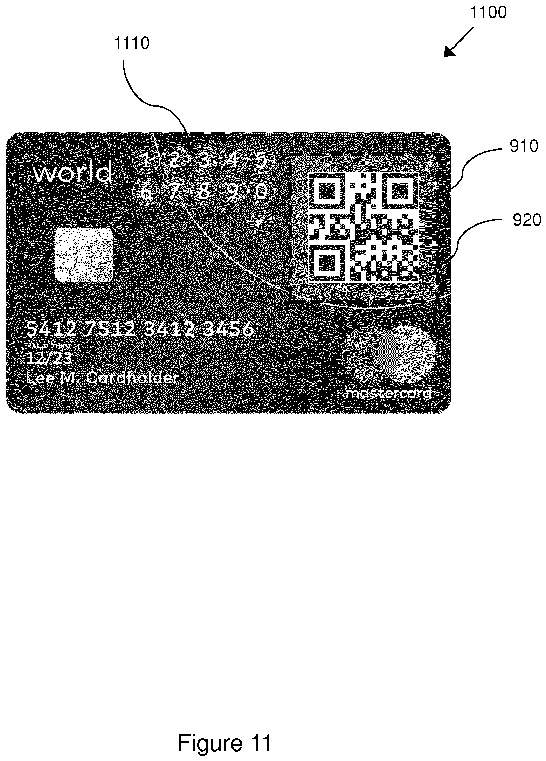

The payment card 1000 shown in Figure 10 comprises the relevant parts of a payment card, as described above with reference to Figure 2, as well as a display 910 and a dynamic QR code 920 that is generated on the payment card, as described with reference to Figure 9. In addition, the payment card 1000 further comprises an in-built consumer verification system. The in-built consumer verification system shown in the payment card 1000 in Figure 10 is a fingerprint scanner 1010 which enables verification of the cardholder by biometric authentication. The in-built consumer verification system may include other methods of biometric authentication. Alternatively, the cardholder may be verified by the cardholder entering a PIN code into an in-built consumer verification system this example is described further below with reference to Figure 11.

For processing a payment transaction in this case, the cardholder may scan their fingerprint to verify their identity. Once the identity of the cardholder is identified, the dynamic QR code 920 may then be generated and subsequently scanned by the POS terminal to process a payment transaction with the merchant device.

The payment card may additionally comprise a dynamic code generator 610. Once the identity of the cardholder is identified, the dynamic code generator 610 may generate a code for entering at the POS terminal. The code may include information that will allow the verification of the cardholder to be checked. The code may then be entered at the POS terminal and the dynamic QR code 920 may then be scanned by the POS terminal to process a payment transaction with the merchant device.

In the event of a potential fraudulent transaction, an invalid code may be generated by the dynamic code generator 610 to prevent the person attempting to perform a fraudulent transaction from knowing that the code or biometric details that they entered are invalid.

Figure 11 is a diagram showing the payment card of Figure 9, further adapted to verify a cardholder using a keypad, in accordance with a seventh embodiment.

The payment card 1100 comprises the relevant parts of a payment card, as described above with reference to Figure 2, as well as a display 910 and a dynamic QR code 920 that is generated on the payment card, as described with reference to Figure 9. In addition, the payment card 1100 further comprises an in-built consumer verification system. The in-built consumer verification system is an alternative to the biometric authentication system described above with reference with Figure 10. The in-built consumer verification system shown in the payment card 1100 in Figure 11 is a keypad 1110 that is built into the payment card 1100, whereby the keypad 1110 enables verification of the cardholder. The in-built consumer verification system may include other devices for verification of the cardholder.

For processing a payment transaction in this case, the cardholder may enter a PIN code or a passcode into the in-built keypad 1110 to verify their identity. Once the identity of the cardholder is identified, the dynamic QR code may then be scanned by the POS terminal to process a payment transaction with the merchant device.

The payment card may additionally comprise a dynamic code generator 610. Once the identity of the cardholder is identified, the dynamic code generator 610 may generate a code for entering at the POS terminal. The code may include information that will allow the verification of the cardholder to be checked. The code may then be entered at the POS terminal and the dynamic QR code 920 may then be scanned by the POS terminal to process a payment transaction with the merchant device.

In the event of a potential fraudulent transaction, an invalid code may be generated by the dynamic code generator 610 to prevent the person attempting to perform a fraudulent transaction from knowing that the code or biometric details that they entered are invalid.

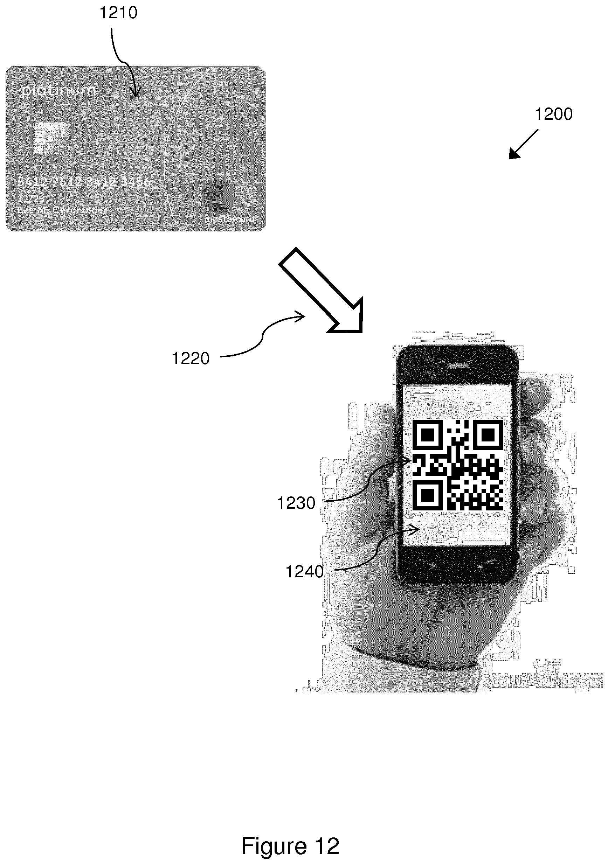

Figure 12 is a diagram 1200 illustrating a method of generating a barcode on a payment card in a form suitable for displaying on an electronic device for performing a transaction, in accordance with a seventh embodiment.

The payment card 1210 shown in Figure 12 comprises the relevant parts of a payment card, as described above with reference to Figure 2. The payment card 1210 is adapted to generate a QR code and then transmit 1220 and display the QR code 1230 on a touchscreen user interface 1240 on a mobile device. The QR code may be a static QR code or a dynamic QR code. The data required to generate the QR code 1230 may be transmitted from the payment card to the mobile device. The data may be transmitted to the mobile device via a communication technology supported by the payment card and the mobile device, for example, directly by NFC or if supported by the card, a Bluetooth signal. Alternatively, this may be embedded in another protocol, such as if a contactless transaction may be performed using the mobile device followed by QR code generation on the mobile device. As noted above, the electronic device could for this purpose be provided with software adapted to generate a barcode from received code information, together with software either to provide input for code generation from an appropriate NFC interaction, or specifically a contactless transaction (in which case the electronic device will need to be programmed to perform relevant parts of EMV protocols). Once the QR code is generated and displayed on the touchscreen user interface 1240 of the mobile device, the QR code 1230 may then be scanned by a POS terminal to process a payment transaction.. Optionally, the cardholder may authenticate the transaction via the mobile device and/or the POS terminal.

This method may be enhanced with a dynamic code generator, for authentication purposes, which may generate a dynamic code and display it on the mobile device, wherein the generated dynamic code may be entered at the POS.

In addition, the payment card 1210 may comprise one or more consumer verification systems and methods, such as, for example, a biometric sensor for scanning a fingerprint or an on-board keypad for entering a passcode.

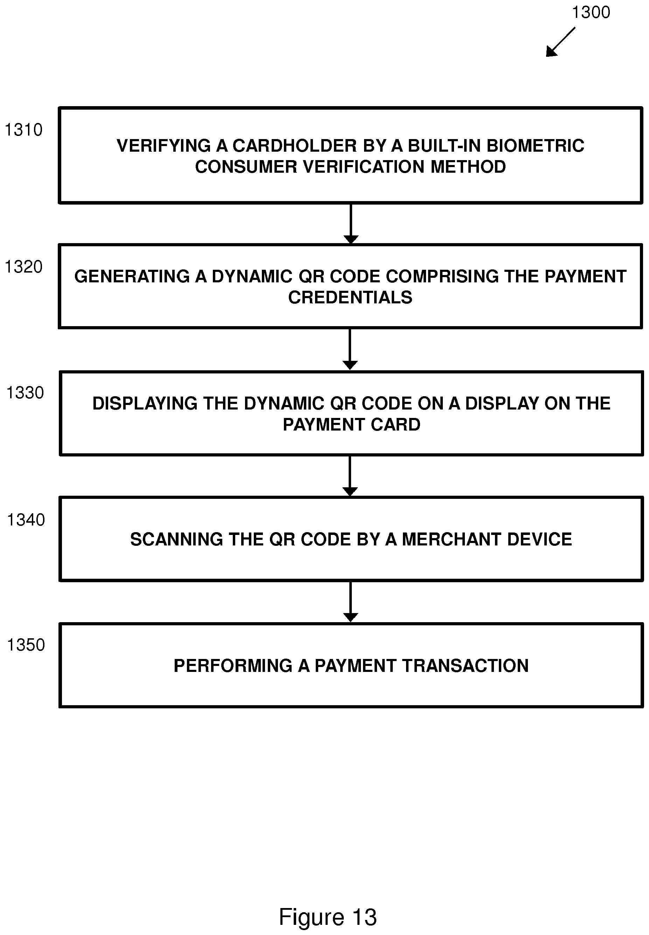

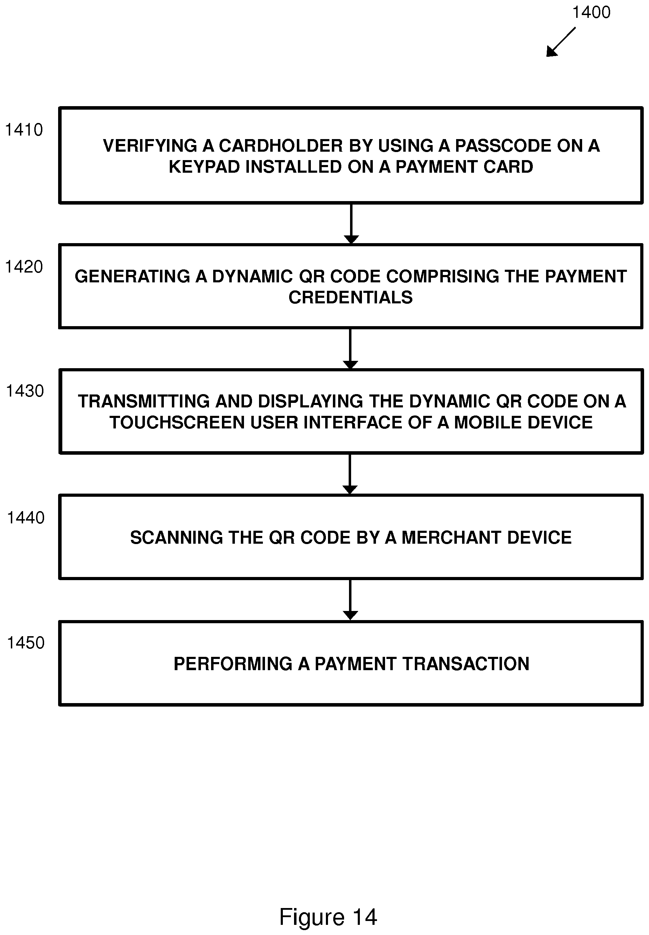

Figures 13 and 14 are exemplary use models described with reference to Figures 10, 11 and 12; however the principles underlying Figures 13 and 14 are applicable to other embodiments.

Figure 13 is a block diagram 1300 showing method steps in accordance with the system described with reference to Figure 10 with regards to the sixth embodiment, for performing a transaction using a dynamic QR code.

First, the method comprises verifying 1310 a cardholder by a built-in biometric consumer verification method. This provides the assurance that the correct cardholder is performing the transaction. Such verification methods may include a biometric authentication mechanism such as a fingerprint, voice recognition, face recognition, or an iris scan (note that ideally all biometrics will also have a live sensor, thus preventing a fraudster using a still photo for face recognition, or a lifted fingerprint on a fingerprint scanner).

Once the user has been verified, a dynamic QR code comprising the payment credentials is generated 1320. In the event that the consumer verification method is invalid, the generated dynamic QR code may provide an indication of the invalidity of the consumer verification to the issuer. This reduces the performance of fraudulent transactions and informs the issuer of an attempted fraudulent transaction before the fraudster is made aware of a rejected transaction.

Given that the consumer verification method is valid, once the dynamic QR code is generated, it is displayed 1330 on the payment card and then scanned 1340 by a merchant device such as a POS terminal. A payment transaction is then performed 1350.

Figure 14 is a block diagram 1400 showing method steps in accordance with an embodiment that combines some of the features described with reference to Figure 11 with some of the features described with reference to Figure 12, for performing a transaction using a dynamic QR code.

First, the method comprises verifying 1410 a cardholder by the cardholder entering a passcode on a keypad built into the payment card. This provides the assurance that the correct cardholder is performing the transaction. Alternatively, such verification methods may include a biometric authentication mechanism such as a fingerprint scan. Once the user has been verified, a dynamic QR code comprising the payment credentials is generated 1420. Once generated, the dynamic QR code is transmitted and displayed 1430 on a touchscreen user interface of a mobile device. The dynamic QR code displayed on the mobile device is then scanned 1440 by a merchant device such as a POS terminal. A payment transaction is then performed 1450.

In the event that the consumer verification method is invalid, the generated dynamic QR code may provide an indication of the invalidity of the consumer verification to the issuer.

Advantageously, the methods described herein for performing a payment transaction enable payment cards to be used for making payments at merchant devices, without requiring the use of a consumer mobile or other electronic device. However the claimed method does not restrict the method to the use of payment cards. Either a payment card or an electronic device can be used for displaying a barcode for scanning. This increases the number of options available to the user for displaying the barcode beyond those already available in currently known systems, and consequently enables the barcode to be used more functionally. By means of example only, this same technology could be used for transport ticketing, event ticketing (such as concerts, cinema, theatre etc), building entry systems and more.

A further advantage of the presently claimed method is that it improves the security of the payment transaction. The cardholder has numerous options for cardholder verification and authentication of the transaction. In addition, the use of a dynamic QR code enables freshness of time-sensitive data.

Further embodiments of the disclosure may be provided in accordance with the scope of the disclosure as defined here. Within the scope of this application it is expressly intended that the various aspects, embodiments, examples and alternatives set out in the preceding paragraphs, in the claims and/or in the description and drawings, and in particular the individual features thereof, may be taken independently or in any combination. That is, all embodiments and/or features of any embodiment can be combined in any way and/or combination, unless such features are incompatible.

## Claims

1. A computer-implemented method of performing a transaction using a payment card, the method comprising:
generating a barcode in a form suitable for scanning by a merchant device to process a payment transaction with the merchant device;
wherein the barcode comprises payment credentials; and
either displaying the barcode on the payment card, or providing the barcode from the payment card for display on an electronic device.

2. The method of Claim 1, wherein the barcode is either a one-dimensional barcode or a two-dimensional barcode.

3. The method of Claim 1 or Claim 2, wherein the barcode is a static barcode.

4. The method of Claim 1 or Claim 2, wherein the barcode is a dynamic barcode.

5. The method of any of Claims 1 to 3, wherein the barcode is generated external to the payment card.

6. The method of Claim 5, wherein the barcode is displayed on or in association with the payment card.

7. The method of Claim 5, wherein the barcode is displayed external to the payment card.

8. The method of any of Claims 1 to 4, wherein the barcode is generated on the payment card.

9. The method of any preceding claim, wherein the payment card comprises a display, and the barcode is displayed on the display of the payment card.

10. The method of any of Claims 1 to 4, wherein the generated barcode is transmitted to and displayed on the electronic device.

11. The method of Claim 10, wherein the generated barcode is transmitted to the electronic device using a short range communication technology.

12. The method of Claim 10 or Claim 11, further comprising an authentication step to authenticate the transaction via the electronic device or the merchant device, wherein the authentication step comprises displaying a dynamic code generator on the payment card suitable for entering at the merchant device.

13. The method of any preceding claim, wherein the method further comprises a verification step to verify a cardholder.

14. The method of Claim 13, wherein the verification step comprises either using a biometric consumer verification method on the payment card or the cardholder entering a passcode on a keypad installed on the payment card.

15. A payment card comprising a processor programmed to perform a transaction as a payment device interacting with a merchant device, the payment card comprising:
either a barcode displayed on the payment card, or the processor programmed to generate a barcode for display on another device, wherein the barcode is in a form suitable for scanning by the merchant device to progress a payment transaction and wherein the barcode comprises payment credentials.
